# EUROPÄISCHE PATENTSCHRIFT

(11) **EP 3 873 723 B1**
(45) Veröffentlichungstag und Bekanntmachung des Hinweises auf die Patenterteilung: **16.10.2024**
(21) Anmeldenummer: 19772696.1
(22) Anmeldetag: 17.09.2019
(51) Int. Cl.: B29C 64/245, B29C 64/379

(54) **VORRICHTUNG ZUM SIMULTANEN 3D-DRUCK MEHRERER OBJEKTE**
DEVICE FOR SIMULTANEOUS 3D PRINTING OF A PLURALITY OF OBJECTS
DISPOSITIF D'IMPRESSION 3D SIMULTANÉE DE PLUSIEURS OBJETS

(30) Priorität: 02.11.2018 DE 102018127382
(43) Veröffentlichungstag der Anmeldung: 08.09.2021
(73) Patentinhaber: Neotech Amt GmbH, 90429 Nürnberg (DE)
(72) Erfinder: HEDGES, Martin, 90443 Nürnberg (DE); SÜTTENBACH, Mirko, 91126 Schwabach (DE)
(74) Vertreter: Lindner Blaumeier Patent- und Rechtsanwälte
(86) Internationale Anmeldenummer: PCT/EP2019/074912
(87) Internationale Veröffentlichungsnummer: WO 2020/088832

(56) Entgegenhaltungen:
- WO-A1-2018/069749
- CN-U- 206 106 369
- KR-A- 20170 130 944
- US-A1- 2005 151 785

## Beschreibung

Die Erfindung betrifft eine Vorrichtung zum simultanen 3D-Druck mehrerer Objekte gemäss Anspruch 1, umfassend mehrere Druckköpfe und mehrere jeweils einem der Druckköpfe zugeordnete Objekthalterungen, wobei die Druckköpfe und die Objekthalterungen durch wenigstens drei Translationsaktoren entlang von drei Translationsachsen in drei Raumdimensionen relativ zueinander bewegbar sind, wobei die Druckköpfe an genau einem Trägerelement und die Objekthalterungen an einem oder mehreren Objekthalterungsträgern angeordnet sind, oder wobei die Druckköpfe an mehreren Trägerelementen und die Objekthalterungen an genau einem Objekthalterungsträger angeordnet sind.

Additive Fertigungsmethoden, welche auch als 3D-Druckverfahren bezeichnet werden, gelangen in technischen Produktionsprozessen zu einer zunehmenden Bedeutung. Zusätzlich zu dem Einsatz dieser Verfahren zum Herstellen von Prototypen gibt es das Bestreben, sie auch für die Herstellung von Objekten in kleineren oder größeren Serien einzusetzen. Konstruktionsbedingt kann jedoch durch einen Druckkopf nur ein einziges Objekt gleichzeitig hergestellt werden. Um mehrere Objekte einer Serie simultan drucken zu können, müssen entweder mehrere Vorrichtungen gleichzeitig betrieben werden oder es müssen Vorrichtungen verwendet werden, welche mehr als einen Druckkopf aufweisen und somit zwei oder mehr Objekte gleichzeitig herstellen können. Insbesondere die Verwendung mehrerer gleichzeitig betriebener Vorrichtungen bietet dabei jedoch den Nachteil, dass bereits bei kleinen Serien von herzustellenden Objekten die Kosten der Herstellung aufgrund der dafür benötigten Anzahl an Vorrichtungen sowie der relativ langsamen Druckgeschwindigkeiten sehr hoch sind.

Zur Erhöhung der Anzahl der mittels einer Vorrichtung herzustellenden Objekte ist es bekannt, mehrere Druckköpfe in einer Reihe an der Vorrichtung anzuordnen, so dass mehrere identisch ausgeführte Objekte simultan gedruckt werden können. So beschreibt EP 2 730 418 B1 eine 3D-Dosiervorrichtung, welche wenigstens zwei Dosierköpfe aufweist, mittels denen simultan auf wenigstens zwei Artikeln ein Dosiermedium in einer 3D-Struktur aufgebracht werden kann. Die in einer Reihe angeordneten Dosierköpfe sind dabei in Bezug zu den Halterungen für die Artikel entlang von drei Translationsachsen sowie zwei Rotationsachsen relativ zueinander beweglich. WO2018/069749A1 offenbart einen 3D-Drucker mit mehreren Druckköpfen. KR20170130944A offenbart einen 3D-Drucker mit einem Druckkopf und mehreren Objektträgern.

Der Erfindung liegt die Aufgabe zugrunde eine demgegenüber verbesserte Vorrichtung zum simultanen 3D-Druck von mehreren Objekten anzugeben.

Zur Lösung dieser Aufgabe ist erfindungsgemäß vorgesehen, dass die Druckköpfe an dem einen Trägerelement oder den mehreren Trägerelementen entlang wenigstens zwei der drei Translationsachsen versetzt angeordnet sind.

Der Vorteil der erfindungsgemäßen Lösung besteht darin, dass durch die Anordnung der Druckköpfe entlang wenigstens zwei der drei Translationsachsen ein kompakter Aufbau der Vorrichtung erreicht werden kann. Ein kompakter Aufbau bietet dabei den Vorteil, dass die Anzahl der Druckköpfe, welche mit einem, insbesondere genau einem Translationsaktor pro Translationsachse bewegt werden können, erhöht werden kann beziehungsweise dass die Größe der verwendeten Translationsaktoren auch bei einer großen Anzahl von Druckköpfen klein gehalten werden kann. Auf diese Weise kann der Aufwand bei der Herstellung der Vorrichtung reduziert werden, was sich auch vorteilhaft auf die Kosten der mittels der Vorrichtung gleichzeitig herzustellenden Serie von Objekten auswirkt und dadurch den 3D-Druck als Herstellungsverfahren auch für weitere Anwendungen öffnet.

Die Druckköpfe sind zu den Objekthalterungen, welche die durch die Druckköpfe herzustellenden Objekte haltern, entlang von drei Translationsachsen in drei Raumrichtungen relativ zueinander bewegbar. Durch diese Bewegbarkeit wird erreicht, dass jede beliebige Objektform durch die Druckköpfe auf den Objekthalterungen erzeugt werden kann. Grundsätzlich ist es ausreichend, wenn die drei Translationsachsen derart zueinander orientiert sind, dass durch sie jede beliebige Position im Raum beziehungsweise in dem für den Druck des Objektes zur Verfügung stehenden Druckvolumen angefahren werden kann. Es wird jedoch bevorzugt, dass jede der Translationsachsen orthogonal zu den zwei anderen Translationsachsen steht, so dass den Translationsbewegungen ein rechtwinkliges Koordinatensystem zugrunde gelegt werden kann. Da derartige Koordinatensysteme gängig in der Technik sind, können durch ihre Verwendung die Herstellung der Objekte sowie die Bedienbarkeit der Vorrichtung erleichtert werden. Die auf dem einen Objekthalterungsträger oder den mehreren Objekthalterungsträgern angeordneten Objekthalterungen können separate Bauteile sein, welche fest oder beweglich mit dem Objekthalterungsträger oder den Objekthalterungsträgern verbunden sind. Es ist auch möglich, dass alle Objekthalterungen oder ein Teil der Objekthalterungen als ein Bereich des Objekthalterungeträgers, mithin also einstückig mit dem Objekthalterungsträger, ausgebildet sind, wobei durch die Druckköpfe zu erzeugende Objekte auf dem jeweils einem der Druckköpfe zugeordneten Bereich des Objekthalterungsträgers hergestellt werden können.

Die Relativbewegung wird durch wenigstens drei Translationsaktoren erzeugt, welche jeweils dem oder einem Objekthalterungsträger beziehungsweise dem oder einem Trägerelement zugeordnet sind. Zum Erzeugen der Relativbewegung zwischen den Druckköpfen und den Objekthalterungen können entweder die Objekthalterungen beziehungsweise die Objekthalterungsträger, auf welchen die Objekthalterungen angeordnet sind, bewegt werden und/oder es kann eine Bewegung der Trägerelemente, an welchen die Druckköpfe angeordnet sind, vorgenommen werden. Ein Translationsaktor, welcher ein Trägerelement oder einen Objekthalterungsträger bewegt, stellt dabei einen Aktor dar, welcher eine Translationsbewegung des Trägerelements bzw. des Objekthalterungsträgers in Bezug zu einer ortsfesten Position hervorruft. Als Translationsaktor kann dabei beispielsweise ein elektrischer Linearmotor oder ein elektrischer Rotationsmotor, welcher mit einer die Rotationsbewegung des Motors in eine Linearbewegung umsetzenden Bewegungsmechanik gekoppelt ist, verwendet werden. Ebenfalls denkbar ist der Einsatz von hydraulischen oder pneumatischen Aktoren als Translationsaktoren.

Erfindungsgemäß kann vorgesehen sein, dass die Druckköpfe und die Objekthalterungen durch wenigstens einen Rotationsaktor um wenigstens eine Rotationsachse relativ zueinander bewegbar sind. Die Möglichkeit, die Druckköpfe und die Objekthalterungen auch um wenigstens eine Rotationsachse relativ zueinander zu bewegen, kann den Druckprozess erleichtern, da es in manchen Situationen vorteilhaft sein kann, einen bereits gedruckten Abschnitt eines Objektes in Bezug zu dem Druckkopf zur Fortsetzung des Druckvorgangs rotieren zu können. Grundsätzlich ist es möglich, dass die Druckköpfe und die Objekthalterungen um drei Rotationsachsen, welche jeweils orthogonal auf den anderen beiden Rotationsachsen stehen, bewegbar sind. Jedoch hat es sich gezeigt, dass für effiziente Produktionsprozesse eine Bewegung um zwei orthogonal zueinander stehende Rotationsachsen ausreichend ist. Das Vorsehen einer relativen Rotationsbewegung zwischen den Druckköpfen und den Objekthalterungen um zwei Rotationsachsen ist technisch einfacher zu realisieren als eine relative Rotierbarkeit entlang von drei Rotationsachsen. Bevorzugt entspricht jede der Rotationsachsen einer der Translationsachsen der Relativbewegung zwischen den Druckköpfen und den Objekthalterungen, da dies die Bedienbarkeit der Vorrichtung erleichtert.

In einer bevorzugten Ausgestaltung der Erfindung kann vorgesehen sein, dass der oder die Objekthalterungsträger jeweils zumindest abschnittsweise durch wenigsten einen Rotationsaktor verkippbar sind und/oder dass das wenigstens eine Trägerelement zumindest abschnittsweise durch wenigstens einen Rotationsaktor verkippbar ist und/oder dass die Objekthalterungen jeweils einen Rotationsaktor umfassen, über welchen sie um eine der wenigstens einen Rotationsachse drehbar sind.

Durch eine zumindest abschnittsweise Verkippung eines Objekthalterungsträgers können alle an dem Objekthalterungsträger angeordneten Objekthalterungen in Bezug zu den Druckköpfen verkippt werden. Beispielsweise kann wenigstens ein Abschnitt eines Objekthalterungsträgers, auf dem mehrere Objekthalterungen in einer Objekthalterungsreihe angeordnet sind, durch eine insbesondere parallel zu der Objekthalterungsreihe verlaufende Rotationsachse verkippt werden, so dass alle Objekthalterungen der Objekthalterungsreihe in Bezug zu den jeweiligen Druckköpfen im gleichen Maß verkippt werden. Selbstverständlich können auch mehrere verkippbare Abschnitte mit jeweils einer Objekthalterungsreihe vorgesehen sein. Wenn der Objekthalterungsträger nur eine Objekthalterungsreihe umfasst, kann auch gesamte der Objekthalterungsträger verkippt werden. Eine derartige, relative Verkippung ist selbstverständlich auch möglich, wenn zusätzlich oder alternativ zu einer zumindest abschnittsweisen Verkippung eines Objekthalterungsträger das Trägerelement, an welchem die den Objekthalterungen zugeordneten Druckköpfe angeordnet sind, zumindest abschnittsweise verkippt wird. Beispielsweise kann wenigstens ein Abschnitt des Trägerelements, an dem mehrere Druckköpfe in einer Druckkopfreihe angeordnet sind, durch eine insbesondere parallel zu der Druckkopfreihe verlaufende Rotationsachse verkippt werden, so dass die Druckköpfe der Druckkopfreihe in Bezug zu den jeweiligen Objekthalterungen in gleichem Maße verkippt werden. Selbstverständlich können auch mehrere verkippbare Abschnitte mit jeweils einer Druckkopfreihe vorgesehen sein. Wenn das Trägerelement nur eine einzelne Druckkopfreihe umfasst, kann auch das gesamte Trägerelement verkippt werden.

Durch Objekthalterungen, welche jeweils einen Rotationsaktor umfassen, über welchen sie um eine der wenigstens einen Rotationsachse drehbar sind, kann eine Verdrehung der Objekthalterung gegenüber dem der Objekthalterung zugeordneten Druckkopf erreicht werden. Bevorzugt erfolgt das zumindest abschnittsweise Verkippen des oder der Objekthalterungsträger und/oder des wenigstens einen Trägerelements um eine erste Rotationsachse und eine Drehung der Objekthalterungen um eine zweite Rotationsachse, wobei die erste Rotationsachse und die zweite Rotationsachse orthogonal zueinander stehen. Bevorzugt wird die relative Bewegbarkeit zwischen den Objekthalterungen und den Druckköpfen entlang zweier Rotationsachsen durch eine Verkippbarkeit wenigstens eines Abschnitts des Objekthalterungsträgers sowie durch eine Drehbarkeit der einzelnen Objekthalterungen erzeugt. Dies ermöglicht es vorteilhaft, auf eine Verkippung der Druckköpfe durch eine Verkippung des Trägerelements zu verzichten, so dass die an dem Trägerelement angeordneten Druckköpfe beispielsweise stets mit einer nach unten weisenden Öffnung betrieben werden können.

Als Rotationsaktor kann beispielsweise ein Elektromotor eingesetzt werden. Es ist auch möglich, dass der Elektromotor mit einer Bewegungsmechanik verbunden ist, wodurch beispielsweise mehrere Objekthalterungsträger oder mehrere Abschnitte eines Objekthalterungsträgers jeweils simultan um eine Rotationsachse verkippbar beziehungsweise mehrere Objekthalterungen simultan jeweils um eine Rotationsachse drehbar sind.

In einer bevorzugten Ausgestaltung der Erfindung kann vorgesehen sein, dass der oder die Objekthalterungsträger über wenigstens einen Translationsaktor entlang einer ersten der Translationsachsen bewegbar ist oder sind, wobei das Trägerelement oder die Trägerelemente über wenigstens zwei Translationsaktoren entlang einer zweiten und einer dritten der Translationsachsen bewegbar ist oder sind.

Durch eine Bewegbarkeit des Objekthalterungsträgers entlang einer ersten der Translationsachsen sowie durch eine Bewegbarkeit des Trägerelementes entlang einer zweiten und einer dritten der Translationsachsen wird die vorgesehene Relativbewegung zwischen Objekthalterungen und Druckköpfen entlang der drei Translationsachsen ermöglicht. Weiterhin besteht dabei der Vorteil, dass auf diese Weise darauf verzichtet werden kann, den wenigstens einen Objekthalterungsträger oder das wenigstens eine Trägerelement um drei Translationsachsen bewegbar zu machen. Dies vereinfacht die Konstruktion der Vorrichtung insbesondere in Bezug auf die Anordnung der Translationsaktoren an dem wenigstens einen Objekthalterungsträger beziehungsweise an dem wenigstens einen Trägerelement.

In einer bevorzugten Ausgestaltung der Erfindung kann vorgesehen sein, dass die erste Translationsachse entlang einer Längsrichtung der Vorrichtung, die zweite Translationsachse entlang einer Querrichtung der Vorrichtung und die dritte Translationsachse entlang einer Hochrichtung der Vorrichtung verläuft, wobei die Druckköpfe an dem Trägerelement entlang von zwei oder mehr sich in Querrichtung erstreckenden Druckkopfreihen angeordnet sind, wobei jede Druckkopfreihe wenigstens drei Druckköpfe umfasst, wobei wenigstens zwei der Druckkopfreihen entlang der Hochrichtung und/oder entlang der Längsrichtung voneinander beabstandet sind. Die Begriffe Längsrichtung und Querrichtung bezeichnen dabei zwei orthogonale Richtungen, welche eine Grundfläche der Vorrichtung aufspannen. Die Zuordnung der Längsrichtung beziehungsweise der Querrichtung an eine der Kanten der Grundfläche und somit an eine der Kanten der Vorrichtung ist grundsätzlich beliebig und dient vorliegend dazu, diese unterschiedlichen, orthogonalen Richtungen unterscheidbar zu machen. Die Hochrichtung beschreibt die Richtung orthogonal zu der von der Längsrichtung und der Querrichtung aufgespannten Fläche, mithin also die Richtung, in welche sich die Höhe der auf der Grundfläche angeordneten Vorrichtung erstreckt.

Die sich jeweils in Querrichtung erstreckenden Druckkopfreihen können jeweils zwei oder mehr Druckköpfe umfassen. Bei einer Druckkopfreihe, welche drei oder mehr Druckköpfe umfasst, ist es vorgesehen, dass ein Abstand der Druckköpfe zu benachbarten Druckköpfen in Querrichtung insbesondere für die Druckköpfe in allen Druckkopfreihen gleich ist. Die Vorrichtung umfasst wenigstens zwei Druckkopfreihen, wobei die zwei Druckkopfreihen entlang der Hochrichtung und/oder entlang der Längsrichtung voneinander beabstandet sind. Selbstverständlich ist es möglich, dass die Vorrichtung mehr als zwei Druckkopfreihen umfasst, wobei jede der Druckkopfreihen zu jeder der anderen Druckkopfreihen jeweils in Hochrichtung und/oder in Längsrichtung beabstandet ist. Durch diese Anordnung der Druckkopfreihen wird es ermöglicht, dass die Druckköpfe entlang von wenigstens zwei der drei Translationsachsen beabstandet eingeordnet sind.

Weiterhin kann erfindungsgemäß vorgesehen sein, dass das Trägerelement wenigstens einen Tragabschnitt mit zwei in Längsrichtung beabstandeten Seiten aufweist, wobei auf der einen Seite wenigstens eine Druckkopfreihe und auf der anderen Seite wenigstens ein Translationsaktor angeordnet ist, wobei das Trägerelement zwei in Längsrichtung beabstandete und über wenigstens einen Verbindungsabschnitt des Trägerelements verbundene Tragabschnitte aufweist und/oder wobei auf der einen Seite des wenigstens einen Tragabschnitts wenigstens zwei Druckkopfreihen übereinander angeordnet sind. Der Tragabschnitt kann dabei ein sich im Wesentlichen entlang der Längsrichtung erstreckendes Segment aufweisen, an welchem die sich in Querrichtung erstreckenden Druckkopfreihen, beispielsweise jeweils an einem weiteren Segment des Tragabschnitts, angeordnet sind. Dabei können auf einer sich entlang der Hochrichtung und der Querrichtung erstreckenden Seite des Tragabschnitts zwei Druckkopfreihen übereinander angeordnet werden, wodurch die Druckköpfe entlang der Querrichtung und entlang der Hochrichtung versetzt angeordnet sind. Auf der den Druckkopfreihen gegenüberliegenden Seite kann wenigstens ein Translationsaktor angeordnet werden, durch welchen das Trägerelement und über das Trägerelement auch die Druckköpfe bewegbar sind. Der Tragabschnitt kann beispielsweise ein Rahmen sein, welcher zwei sich in Hochrichtung erstreckende Rahmensegmente umfasst, zwischen denen sich in Querrichtung erstreckende Querstreben angeordnet sind, wobei die Druckkopfreihe oder die Druckkopfreihen jeweils an einer Querstrebe angeordnet sind.

Es ist möglich, dass das Trägerelement zwei in Längsrichtung beabstandete Tragabschnitte, welche beispielsweise jeweils ein sich in Hochrichtung erstreckendes Segment aufweisen und/oder welche jeweils als ein Rahmen ausgeführt sind, umfasst. Die Tragabschnitte sind dabei in Längsrichtung beabstandet und über wenigstens einen sich in Längsrichtung erstreckenden Verbindungsabschnitt des Trägerelements verbunden. Bei dieser Ausgestaltung ist auf jeweils einer Seite eines Tragabschnittes jeweils wenigstens eine Druckkopfreihe angeordnet. Auf diese Weise sind die Druckköpfe entlang der Querrichtung sowie der Längsrichtung voneinander beabstandet. Selbstverständlich ist es möglich, dass an den Seiten der in Längsrichtung beabstandeten Tragabschnitte jeweils auch wenigstens zwei Druckkopfreihen übereinander angeordnet sind, so dass insgesamt die Druckköpfe der Vorrichtung in Querrichtung, in Längsrichtung und in Hochrichtung voneinander beabstandet sind. Dadurch kann eine besonders platzsparende Anordnung einer Mehrzahl von Druckköpfen sowie ein besonders platzsparender Aufbau der Vorrichtung erreicht werden. Neben einer Platzersparnis ergibt sich durch eine kompakte Anordnung der Mehrzahl von Druckköpfen und somit auch der Objekthalterungen eine verbesserte Bewegbarkeit des wenigstens einen Trägerelements bzw. des wenigstens einen Objekthalterungsträgers.

Für die Anordnung des wenigstens einen Translationsaktors kann erfindungsgemäß vorgesehen sein, dass die zwei in Längsrichtung beabstandeten Tragabschnitte und der wenigstens eine Verbindungsabschnitt einen Aufnahmeraum, in welchem der wenigstens eine Translationsaktor angeordnet ist, zumindest teilweise, insbesondere in einer U-Form, deren Schenkel durch die Tragabschnitte und deren Boden durch den wenigstens einen Verbindungsabschnitt gebildet ist, umschließen. Das Trägerelement kann dabei einen in Längsrichtung und in Hochrichtung zumindest im Wesentlichen U-förmigen Querschnitt aufweisen, welcher seitlich durch jeweils einen der Tragabschnitte sowie durch den sich in Längsrichtung erstreckenden Verbindungsabschnitt gebildet wird. Zwischen den jeweils einen Schenkel der U-Form bildenden Tragabschnitten und dem den Boden der U-Form bildenden wenigstens einen Verbindungsabschnitt verbleibt ein Aufnahmeraum, in welchem der wenigstens eine Translationsaktor zur Bewegung des Trägerelements angeordnet ist. Aufgrund der Anordnung des wenigstens einen Translationsaktors in dem Aufnahmeraum ist die wenigstens eine Druckkopfreihe an den Tragabschnitten bevorzugt jeweils an der von dem Aufnahmeraum abgewandten Seite des Tragabschnitts angeordnet, so dass die Druckköpfe jeweils randseitig an dem Trägerelement angeordnet und nach außen gerichtet sind. Dies kann als eine "back-to-back"-Anordnung der Druckkopfreihen aufgefasst werden, da die Druckkopfreihen eines der Tragabschnitte den Druckkopfreihen des anderen Tragabschnitts jeweils ihre Rückseite zuwenden und nur durch die Tragabschnitte und den Aufnahmeraum voneinander beabstandet sind. Eine derartige Ausführung bietet den Vorteil einer kompakten Anordnung der Druckköpfe um das Trägerelement und den wenigstens einen Translationsaktor herum. Eine möglichst kompakte Anordnung der Druckköpfe um den wenigstens einen Translationsaktor herum reduziert vorteilhaft ein Trägheitsmoment des Trägerelements und somit der Anordnung der Druckköpfe bei ihrer Bewegung durch den wenigstens einen Translationsaktor.Auf diese Weise können eine Ansteuerung des wenigstens einen Translationsaktors zur Bewegung des Trägerelements vereinfacht und die Qualität der herzustellenden Objekte verbessert werden.

In einer bevorzugten Ausgestaltung der Erfindung kann vorgesehen sein, dass die Tragabschnitte und die Druckkopfreihen spiegelsymmetrisch zu einer sich in Querrichtung und Hochrichtung erstreckenden, zwischen den Tragabschnitten verlaufenden Symmetrieebene sind. Selbstverständlich ist es auch möglich, dass der wenigstens eine Verbindungsabschnitt spiegelsymmetrisch zu der Symmetrieebene ist. Zusätzlich dazu kann vorgesehen sein, dass die Tragabschnitte und/oder die Druckkopfreihen auch spiegelsymmetrisch zu einer ersten weiteren, sich in Längsrichtung und Hochrichtung erstreckenden Symmetrieebene und/oder einer zweiten weiteren, sich in Längsrichtung und Querrichtung erstreckenden Symmetrieebene sind. Durch Erzeugung einer Symmetrie der Tragabschnitte und der Druckkopfreihen in Längsrichtung der Vorrichtung sowie gegebenenfalls durch eine Symmetrie der Tragschnitte und/oder der Druckkopfreihen auch in Querrichtung der Vorrichtung kann erreicht werden, dass das zu bewegende Trägerelement eine bezogen auf die eine oder die mehreren Symmetrieebenen möglichst gleichmäßige Gewichtsverteilung aufweist. Der wenigstens eine Translationsaktor kann dabei insbesondere in oder nahe einer Symmetrieebene bzw. an einer Schnittgeraden oder einem Schnittpunkt von zwei bzw. drei Symmetriebenen angeordnet sein. Dadurch ergibt sich eine Anordnung des wenigstens einen Translationsaktors nahe an einem Massenschwerpunkt des Trägerelements. Dies vereinfacht die Ansteuerung des zur Bewegung des Trägerelements vorgesehenen wenigstens einen Translationsaktors und vereinfacht das Erzielen einer guten Qualität sowie gleicher Eigenschaften beim Drucken der Objekte.

Erfindungsgemäß kann vorgesehen sein, dass der wenigstens eine Tragabschnitt einen Rahmen umfasst, welcher wenigstens für jede an der Seite des Tragabschnitts angeordnete Druckkopfreihe eine sich in Querrichtung erstreckende Querstrebe aufweist, wobei die Druckköpfe einer Druckkopfreihe jeweils, insbesondere über ein Abstandselement, an derselben Querstrebe befestigt sind. Der Rahmen kann beispielsweise zwei sich in Längsrichtung und Hochrichtung erstreckende Rahmensegmente aufweisen, welche entlang der Querrichtung voneinander beabstandet sind und zwischen welchen jeweils die Querstreben angeordnet sind. Auf diese Art wird eine stabile und leichte Konstruktion für den Tragabschnitt erzielt.

Die Druckköpfe einer Druckkopfreihe können dabei an einer sich in Querrichtung erstreckenden Querstrebe über ein Abstandselement angeordnet sein. Das Abstandselement kann dabei ein Teil des Tragabschnitts sein oder es kann sich um ein separates Bauteil handeln, welches an dem Tragabschnitt und an dem Druckkopf oder den Druckköpfen befestigt wird. Durch das Abstandsselement kann insbesondere in Längsrichtung eine Beabstandung der Druckköpfe von der Querstrebe erfolgen, so dass vorteilhaft der Bewegungsspielraum der Druckköpfe aufgrund der Beabstandung der Druckköpfe zu dem Trägerelement erhöht werden kann. Es ist insbesondere auch möglich, dass jeder der Druckköpfe über ein separates Abstandselement von dem Tragabschnitt beabstandet ist.

Für den wenigstens einen Objekthalterungsträger kann erfindungsgemäß vorgesehen sein, dass er mit wenigstens einem Translationsaktor bewegungsgekoppelt und wenigstens entlang der Längsrichtung bewegbar ist, wobei an dem wenigstens einen Objekthalterungsträger mehrere Objekthalterungen in wenigstens zwei sich in Querrichtung erstreckenden Objekthalterungsreihen angeordnet sind, wobei die wenigstens zwei Objekthalterungsreihen an dem Objekthalterungsträger derart in Längsrichtung und/oder in Hochrichtung versetzt angeordnet sind, dass jeweils die Objekthalterungen einer Objekthalterungsreihe unterhalb der Druckköpfe einer der wenigstens zwei Druckkopfreihen angeordnet sind.

Bevorzugt ist der wenigstens eine Objekthalterungsträger mit wenigstens einem Translationsaktor bewegungsgekoppelt und wenigstens entlang der Längsrichtung bewegbar. Die relative Bewegbarkeit zwischen Druckköpfen und Objekthalterungen in Querrichtung und in Hochrichtung kann in diesem Fall bevorzugt durch zwei Translationsaktoren an dem einen Trägerelement oder an jedem der Trägerelemente erfolgen. Durch die Bewegbarkeit des wenigstens einen Objekthalterungsträgers in der Längsrichtung sowie durch die Bewegbarkeit des wenigstens einen Trägerelements in der Querrichtung und der Hochrichtung kann die relative Bewegbarkeit zwischen dem Druckkopf und den Objekthalterungen entlang aller drei Translationsachsen vorteilhaft umgesetzt werden.

Analog zu der Anordnung der Druckköpfe in sich in Querrichtung erstreckenden Druckkopfreihen sind auch die Objekthalterungen an dem wenigstens einen Objekthalterungsträger in wenigstens zwei sich in Querrichtung erstreckenden Objekthalterungsreihen angeordnet. Die Objekthalterungsreihen sind an dem wenigstens einen Objekthalterungsträger in Längsrichtung und/oder in Hochrichtung versetzt angeordnet. Die Anordnung erfolgt dabei derart, dass die Objekthalterungen einer der Objekthalterungsreihen jeweils unter einem der Druckköpfe einer der wenigstens zwei Druckkopfreihen angeordnet sind. Bevorzugt ist jeder Druckkopfreihe eine Objekthalterungsreihe zugeordnet, wobei insbesondere jedem Druckkopf eine Objekthalterung zugeordnet ist. Insbesondere ist für jeden Druckkopf genau eine Objekthalterung vorhanden, welche unterhalb des Druckkopfes angeordnet ist. Die Objekthalterung kann dabei in Längsrichtung und in Querrichtung eine Größe aufweisen, welche wenigstens der Ausdehnung des Druckvolumens in Längsrichtung und in Querrichtung entspricht, so dass ein zu druckendes Objekt während des Druckvorgangs gänzlich auf der Objekthalterung angeordnet sein kann.

Weiterhin kann erfindungsgemäß vorgesehen sein, dass der wenigstens eine Objekthalterungsträger einen Rahmen mit mehreren, sich entlang der Querrichtung erstreckenden Querstreben aufweist, wobei die Objekthalterungsreihen jeweils an, insbesondere auf, einer Querstrebe angeordnet sind. Die Ausgestaltung des Objekthalterungsträgers als Rahmen weist analog zu der Ausgestaltung der Tragabschnitte des Trägerelements den Vorteil auf, dass das Gesamtgewicht des wenigstens einen Objekthalterungsträgers vorteilhaft gering gehalten werden kann, was eine einfache Bewegbarkeit und eine präzise Positionierung und somit qualitativ gute Druckergebnisse ermöglicht. Die Querstreben des Objekthalterungsträgers sind in Hochrichtung insbesondere so weit voneinander beabstandet, dass der freie Platz oberhalb jeder der insbesondere auf den Querstreben angeordneten Objekthalterungen ausreichend für die Druckköpfe der der jeweiligen Objekthalterungsreihe zugeordneten Druckkopfreihe ist, wobei die Druckköpfe von der nach oben nachfolgenden Querstrebe wenigstens soweit beabstandet sind, wie das wenigstens eine Trägerelement in Hochrichtung zum vertikalen Durchfahren des Druckvolumens verfahrbar ist, so dass ein Anstoßen der Druckköpfe an eine oberhalb der Druckköpfe angeordnete Querstrebe während des Druckens vermieden wird.

In einer bevorzugten Ausgestaltung der Erfindung kann vorgesehen sein, dass die Objekthalterungsreihen jeweils über wenigstens einen Rotationsaktor um eine in Querrichtung verlaufende Rotationsachse verkippbar sind. Vorteilhaft erfolgt dabei eine Bewegungskopplung mehrerer Objekthalterungsreihen mit einem Rotationsaktor, da auf diese Weise eine gemeinsame Verkippung der mehreren, insbesondere aller, Objekthalterungen durch nur einen Rotationsaktor ermöglicht wird. Eine verkippbare Objekthalterungsreihe kann beispielsweise auf einer drehbar gelagerten Querstrebe eines als Rahmen ausgebildeten Objekthalterungsträgers angeordnet sein, so dass die Objekthalterungsreihe durch eine Verkippung der Querstrebe verkippbar ist.

Es ist jedoch auch möglich, dass jede Objekthalterung über einen Rotationsaktor verkippbar ist. Um eine gegebenenfalls erwünschte Drehung des Objektes relativ zu dem Druckkopf zu realisieren, kann es vorgesehen sein, dass eine oder mehrere Objekthalterungen jeweils mit einem weiteren Rotationsaktor gekoppelt sind, über welchen die Objekthalterungen jeweils um eine beispielsweise in Hochrichtung verlaufende zweite Rotationsachse drehbar sind. Vorteilhaft ist hier jede Objekthalterungsreihe um eine eigene, erste Rotationsachse verkippbar, wobei die ersten Rotationsachsen der Objekthalterungsreihen sich jeweils in Querrichtung erstrecken und parallel zueinander sind. Bei einer Drehbarkeit der Objekthalterungen ist jede einzelne Objekthalterung um eine sich, insbesondere in einem unverkippten Zustand der Objekthalterungen in Hochrichtung erstreckende zweite Rotationsachse drehbar, wobei die zweiten Rotationsachsen ebenfalls jeweils parallel zueinander sind. Die weiteren Rotationsaktoren können dabei bevorzugt an einer verkippbaren Querstrebe angeordnet sein, so dass die Objekthalterungen über eine Verkippung der Querstrebe verkippt und über die weiteren Rotationsaktoren um eine ebenfalls verkippte zweite Rotationsachse gedreht werden können.

Für die Druckköpfe kann erfindungsgemäß vorgesehen sein, dass sie jeweils zur Aufnahme von zur Objektherstellung verwendetem Material in fester Form, insbesondere von Filamenten, Pellets und/oder Pulver, und/oder zur Aufnahme von zur Objektherstellung verwendetem Material in flüssiger Form, insbesondere von Tinten, Pasten und/oder Harz, ausgebildet sind und/oder dass die Druckköpfe jeweils zum Druck von elektronischen Bauteilen ausgebildet sind. Die Druckköpfe können somit beispielsweise zum Druck durch Fused Deposition Modeling beziehungsweise Fused Filament Fabrication und/oder zur Fertigung von Elektronik, beispielsweise zum Druck von Objekten mittels tintenstrahlbasierter Verfahren, ausgebildet sein.

Weitere Vorteile und Einzelheiten der Erfindung ergeben sich aus den im Folgenden beschriebenen Ausführungsbeispielen sowie anhand der Zeichnungen. Dabei zeigen:
- Fig. 1: eine schematische Frontansicht eines ersten Ausführungsbeispiels einer erfindungsgemäßen Vorrichtung,
- Fig. 2: eine Seitenansicht des ersten Ausführungsbeispiels einer erfindungsgemäßen Vorrichtung,
- Fig. 3: eine Seitenansicht eines zweiten Ausführungsbeispiels einer erfindungsgemäßen Vorrichtung,
- Fig. 4: eine Seitenansicht eines dritten Ausführungsbeispiels einer erfindungsgemäßen Vorrichtung, sowie
- Fig. 5: eine Seitenansicht eines vierten Ausführungsbeispiels einer erfindungsgemäßen Vorrichtung.

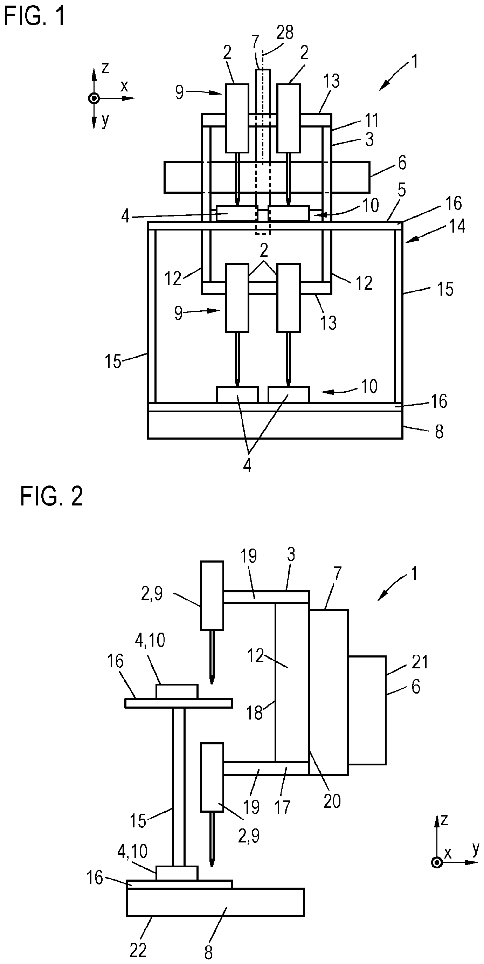

In Fig. 1 ist eine Frontansicht eines ersten Ausführungsbeispiels einer erfindungsgemäßen Vorrichtung 1 dargestellt. Die Vorrichtung 1 umfasst mehrere Druckköpfe 2, welche an einem Trägerelement 3 der Vorrichtung 1 angeordnet sind. Weiterhin umfasst die Vorrichtung 1 mehrere Objekthalterungen 4, welche an einem Objekthalterungsträger 5 der Vorrichtung 1 angeordnet sind. Das Trägerelement 3 ist über einen ersten Translationsaktor 6 entlang einer Querrichtung, hier der X-Richtung, der Vorrichtung 1 bewegbar. Über einen zweiten Translationsaktor 7 ist das Trägerelement 3 entlang einer Hochrichtung der Vorrichtung, hier der Z-Richtung, bewegbar. Alternativ ist es möglich, dass das Trägerelement 3 über den ersten Translationsaktor 6 entlang der Hochrichtung und über den zweiten Translationsaktor 7 entlang der Querrichtung bewegbar ist. Der Objekthalterungsträger 5 ist über einen dritten Translationsaktor 8 entlang einer Längsrichtung, hier der Y-Richtung, der Vorrichtung 1 bewegbar.

Aufgrund der Bewegbarkeit des Trägerelements 3 entlang von zwei Translationsachsen, welche sich in diesem Ausführungsbeispiel entlang der X-Achse, beziehungsweise der Querrichtung der Vorrichtung 1, und der Z-Achse, beziehungsweise der Hochrichtung der Vorrichtung 1, erstrecken, sowie der Bewegbarkeit des Objekthalterungsträgers 5 in Y-Richtung, beziehungsweise entlang der Längsrichtung der Vorrichtung 1, ist eine relative Bewegbarkeit zwischen den Druckköpfen 2 und den Objekthalterungen 4 entlang von drei Translationsachsen gegeben.

Die Objekthalterungen 4 sind jeweils unterhalb einen der Druckköpfe 2 angeordnet. Auf diese Weise wird es ermöglicht, dass im Betrieb der Vorrichtung 1 durch die Druckköpfe 2 auf den Objekthalterungen 4 simultan jeweils ein Objekt gedruckt wird. Aufgrund der gemeinsamen Relativbewegbarkeit der Druckköpfe 2 zu den Objekthalterungen 4 weisen die simultan gedruckten Objekte eine gleiche Form auf. Alternativ zu der hier gezeigten Ausführungsform der Objekthalterungen 4 als separate Bauteile ist es möglich, dass alle Objekthalterungen 4 oder ein Teil der Objekthalterungen 4 als ein Bereich des Objekthalterungeträgers 5, mithin also einstückig mit dem Objekthalterungsträger 5, ausgebildet sind, wobei durch die Druckköpfe 2 zu erzeugende Objekte auf dem jeweils einem der Druckköpfe 2 zugeordneten Bereich des Objekthalterungsträgers 5 hergestellt werden können.

Durch die Beabstandung der Druckköpfe 2 sowohl in Querrichtung der Vorrichtung 1 als auch in Hochrichtung der Vorrichtung 1 kann die Anzahl der zu druckenden Objekte erhöht werden, wobei vorteilhaft eine kompakte Anordnung der Druckköpfe 2 an dem Trägerelement 3 ermöglicht wird, so dass vorteilhaft eine Bewegung aller Druckköpfe 2 der Vorrichtung 1 mit jeweils nur einem einzelnen Translationsaktor pro Translationsachse erreicht werden kann.

Jeweils zwei der dargestellten Druckköpfe 2 sind in einer Druckkopfreihe 9 angeordnet. Selbstverständlich ist es möglich, dass jede Druckkopfreihe 9 mehr als zwei in Querrichtung versetzt angeordnete Druckköpfe 2 umfasst. Entsprechend den Druckköpfen 2 sind auch jeweils zwei der Objekthalterungen 4 in jeweils einer Objekthalterungsreihe 10 angeordnet. Jede der Objekthalterungsreihen 10 ist einer der Druckkopfreihen 9 zugeordnet, wobei sich jeweils eine der Objekthalterungen 4 unterhalb eines der Druckköpfe 2 befindet.

Das Trägerelement 3 umfasst einen Rahmen 11, welcher aus zwei Rahmensegmenten 12, welche sich entlang der Hochrichtung erstrecken, sowie aus zwei Querstreben 13, welche sich entlang der Querrichtung erstrecken, besteht. Jede der Druckkopfreihen 9 ist dabei an einer der Querstreben 13 des Rahmens 11 angeordnet.

Der Objekthalterungsträger 5 umfasst einen Rahmen 14, welcher durch zwei sich in Hochrichtung erstreckende Rahmensegmente 15 sowie zwei sich in Querrichtung erstreckende Querstreben 16 gebildet wird. Jede der Objekthalterungsreihen 10 ist auf einer der Querstreben 16 des Rahmens 14 angeordnet. Die rahmenartigen Konstruktionen des Trägerelements 3 sowie des Objekthalterungsträgers 5 weisen vorteilhaft ein geringes Gesamtgewicht auf, so dass das Trägerelement 3 durch den ersten Translationsaktor 6 sowie den zweiten Translationsaktor 7 und der Objekthalterungsträger 5 durch den dritten Translationsaktor 8 möglichst schnell und präzise bewegt werden können.

Die Befestigung des Trägerelements 3 an dem zweiten Translationsaktor 7 kann beispielsweise über eine in Fig. 1 nicht gezeigte, rückseitige Platte des Trägerelements, welche an der den Druckkopfreihen 9 gegenüberliegenden Seite des Rahmens 11 angeordnet ist, erfolgen. Es ist auch möglich, dass der zweite Translationsaktor 7 an einer oder mehreren Querstreben 13 und/oder an einer oder mehreren der sich in Hochrichtung erstreckenden Rahmensegmenten 12 befestigt ist.

In Fig. 2 ist eine schematische Seitenansicht des ersten Ausführungsbeispiels der erfindungsgemäßen Vorrichtung 1 dargestellt. Ersichtlich ist das Trägerelement 3 an dem zweiten Translationsaktor 7 befestigt, welcher seinerseits an dem ersten Translationsaktor 6 befestigt ist. Selbstverständlich ist der erste Translationsaktor 6 über eine hier nicht dargestellte Verbindung ortsfest, beispielsweise an einer Bodenplatte der Vorrichtung 1, verbunden, so dass die mechanische Stabilität der Vorrichtung 1 und die Bewegbarkeit des Trägerelements 3 entlang der Querrichtung und der Hochrichtung gegeben ist. Es ist auch möglich, dass das Trägerelement 3 an dem das Trägerelement 3 in Querrichtung bewegenden ersten Translationsaktor 6 befestigt ist, wobei der erste Translationsaktor 6 an dem zweiten Translationsaktor 7, welcher ortsfest angeordnet ist, befestigt ist. Entsprechend ist auch der dritte Translationsaktor 8, welcher an dem Objekthalterungsträger 5 befestigt ist, ebenfalls ortsfest, beispielsweise an derselben Grundplatte wie der erste Translationsaktor 6, befestigt, so dass auch die Bewegbarkeit des Objekthalterungsträgers 5 gegeben ist.

Das Trägerelement 3 umfasst einen Tragabschnitt 17, welcher in diesem Ausführungsbeispiel durch den Rahmen 11 gebildet wird und welcher entlang der Längsrichtung und der Hochrichtung einen rechteckigen Querschnitt aufweist, der von einer Seite des sich in Hochrichtung erstreckenden Rahmensegments 12 gebildet wird. Die Druckkopfreihen 10, von denen in Fig. 2 jeweils ein Druckkopf 2 zu sehen ist, sind an einer Seite 18 des Tragabschnitts 17 angeordnet. Zwischen den Druckköpfen 2 und dem Tragabschnitt 17 ist dabei jeweils ein Abstandselement 19, welches in diesem Ausführungsbeispiel als Teil des Trägerelements 3 ausgeführt ist, angeordnet, so dass die Druckköpfe 2 von dem Tragabschnitt 17 in Längsrichtung beabstandet sind. Durch die Beabstandung der Druckköpfe 2 durch die Abstandselemente 19 wird die relative Bewegbarkeit zwischen den Objekthalterungen 4 und den Druckköpfen 2 bzw. zwischen dem Objekthalterungsträger 5 und dem Tragabschnitt 17 des Trägerelements 3 vergrößert. Alternativ ist es möglich, dass alle Druckköpfe 2 einer Druckkopfreihe 9 oder alle an derselben Seite des Tragabschnitts 17 angeordneten Druckköpfe 2 des über ein gemeinsames Abstandselement 19 des Trägerelements 3 von dem Tragabschnitt 17 beabstandet sind.

Auf der den Druckköpfen 2 gegenüberliegenden Seite 20 des Tragabschnittes 17 sind der erste Translationsaktor 6 sowie der zweite Translationsaktor 7 angeordnet. Dabei ist, wie vorangehend beschrieben, der zweite Translationsaktor 7 an dem Trägerelement 3 befestigt und der erste Translationsaktor 6 an dem zweiten Translationsaktor 7. Die Translationsaktoren 6, 7, 8 sind in diesem Ausführungsbeispiel als elektrische Linearmotoren ausgeführt, wodurch bei einer ortsfesten Befestigung einer Seite 21 des ersten Translationsaktors 6 eine relative Bewegbarkeit des Trägerelements 3 entlang der Querrichtung und der Hochrichtung sowie bei einer ortsfesten Anordnung einer Seite 22 des dritten Translationsaktors 8 eine relative Bewegbarkeit zwischen Druckköpfen 2 und den Objekthalterungen 4 entlang der Längsrichtung möglich ist.

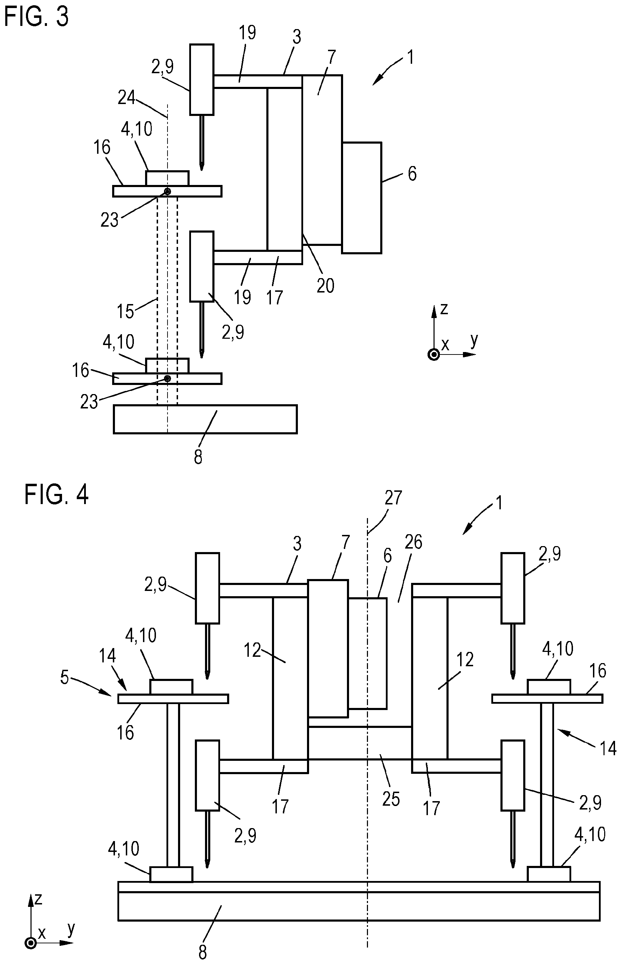

Fig. 3 zeigt eine schematische Seitenansicht eines zweiten Ausführungsbeispiels einer erfindungsgemäßen Vorrichtung 1. Im Unterschied zu dem vorangehend beschriebenen, ersten Ausführungsbeispiel weist die Vorrichtung 1 gemäß des zweiten Ausführungsbeispiels zusätzlich die Möglichkeit einer Relativbewegung zwischen den Objekthalterungen 4 und den Druckköpfen 2 um zwei erste Rotationsachsen 23 sowie zwei zweite Rotationsachsen 24 auf. Die ersten Rotationsachsen 23 verlaufen dabei entlang der Querrichtung und sind entlang der Hochrichtung versetzt. Die ersten Rotationsachsen 23 verlaufen dabei jeweils durch eine der Querstreben 16 des Objekthalterungsträgers 4. Das Rahmensegment 15, welches die beiden Querstreben 16 verbindet, ist in Fig. 3 aus Übersichtlichkeitsgründen gestrichelt dargestellt.

Durch einen in Fig. 3 nicht dargestellten ersten Rotationsaktor kann eine Verkippung der Objekthalterungsträger 4 beispielsweise durch Drehung der Querstreben 16 um die ersten Rotationsachsen 23 erfolgen. Die Querstreben 16 können dazu an den Rahmensegmenten 15 drehbar gelagert sein. Bei dem ersten Rotationsaktor kann es sich beispielsweise um einen Rotationselektromotor handeln, welcher über eine Bewegungsmechanik mit den Querstreben 16 gekoppelt ist.

Weiterhin sind die Objekthalterungen 4 entlang von zwei zweiten Rotationsachsen 24 drehbar. Die zweiten Rotationsachsen 24 verlaufen bei nicht verkippten Querstreben 16 ebenfalls in Hochrichtung und sind bezogen zu der dargestellten Rotationsachse 24 in Querrichtung versetzt. Jede der Objekthalterungen 4 ist mit einem zweiten Rotationsaktor gekoppelt, durch welchen eine Drehung der Objekthalterung 4 um die zweite Rotationsachse 24 ermöglicht wird. Bei dem zweiten Rotationsaktor kann es sich beispielsweise um einen Rotationselektromotor handeln, durch welchen die Objekthalterung 4 drehbar ist. Der zweite Rotationsaktor kann dabei insbesondere an demselben Querträger 16 angeordnet sein wie die durch ihn drehbare Objekthalterung 4. Dadurch kann in einfacher Weise eine Verkippbarkeit der Objekthalterungen 4 um die ersten Rotationsachsen 23 sowie eine Drehbarkeit der Objekthalterungen 4 um die, bei verkipptem Querträger 16 ebenfalls verkippten, zweiten Rotationsachsen 24 realisiert werden. Zusätzlich zu den Rotationsbewegungen können die Objekthalterungen 4, wie vorangehend beschrieben, über den den Objekthalterungsträger 5 bewegenden, dritten Translationsaktor 8 in Längsrichtung bewegt werden.

In Fig. 4 ist eine Seitenansicht eines dritten Ausführungsbeispiels einer erfindungsgemäßen Vorrichtung 1 dargestellt. Die Frontansicht des dritten Ausführungsbeispiels entspricht der Darstellung in Fig. 1, wobei es selbstverständlich auch im dritten Ausführungsbeispiel möglich ist, dass die Druckkopfreihen 9 beziehungsweise die Objekthalterungsreihen 10 jeweils mehr als zwei Druckköpfe 2 beziehungsweise Objekthalterungen 4 umfassen. Das dritte Ausführungsbeispiel unterscheidet sich dadurch, dass das Trägerelement 3 zwei Tragabschnitte 17 umfasst, welche über einen Verbindungsabschnitt 25 des Trägerelements 3 verbunden sind. Die Tragabschnitte 17 werden jeweils, wie bereits in Bezug zu den Fig. 1 und 2 beschrieben wurde, von einem Rahmen 11 gebildet, welcher sich in Hochrichtung erstreckende Rahmensegmente 12 sowie zwischen diesen angeordnete Querstreben 13, an denen jeweils eine Druckkopfreihe 9 angeordnet ist, umfasst. Dabei entsteht in der dargestellten Aufsicht auf die Längsrichtung und die Hochrichtung ein U-förmiger Querschnitt des Trägerelements 3, bei dem die Schenkel der U-Form durch die Tragabschnitte 17 bzw. die Rahmensegmente 12 sowie der Boden der U-Form durch den Verbindungsabschnitt 25 erzeugt werden. Durch die U-Form des Trägerelements 3 wird ein Aufnahmeraum 26 zumindest teilweise begrenzt. Der Verbindungsabschnitt 25 kann durch wenigstens ein separates Bauteil gebildet sein, welches an den Tragabschnitten 17, beispielsweise an den jeweils unteren Querstreben 16 der Rahmen 11, befestigt ist. Es ist jedoch auch möglich, dass das Trägerelement 3 einstückig gefertigt ist, wobei der Verbindungsabschnitt 25 an die Tragabschnitte 17, insbesondere an die unteren Querstreben 16 von durch einen Rahmen 11 gebildeten Tragabschnitte 17, angrenzt.

In dem Aufnahmeraum 26 sind der erste Translationsaktor 6 und der zweite Translationsaktor 7 aufgenommen. Auf diese Weise wird eine besonders kompakte Bauform der Vorrichtung 1 erreicht. Die Anordnung der Tragabschnitte 17, des Verbindungsabschnitts 25 und der Druckköpfe 2 ist derart, dass diese symmetrisch um eine sich in Querrichtung und Hochrichtung erstreckende Symmetrieebene 27 angeordnet sind. Zusätzlich kann, wie es in Fig. 1 dargestellt ist, auch bezüglich einer weiteren Symmetrieebene 28, welche sich entlang der Längsrichtung und der Hochrichtung erstreckt, eine symmetrische Anordnung des Trägerelements 3 sowie der Druckköpfe 2 erreicht werden. Durch die Symmetrie in Längsrichtung als auch durch die Symmetrie in Querrichtung des Trägerelements 3 und der Druckköpfe 2 wird eine gleichmäßige Gewichtsverteilung des Trägerelements 3 und der Druckköpfe 2 erreicht. Weiterhin wird durch die Anordnung des ersten Translationsaktor 6 und des zweiten Translationsaktor 7 in dem Aufnahmeraum 26 eine Anordnung der Translationsaktoren 6, 7 in der Nähe des Schwerpunkts des Trägerelements 3 und der Druckköpfe 2 erzielt. Dies wirkt sich vorteilhaft auf die Bewegbarkeit des Trägerelements 3 durch den ersten Translationsaktor 6 und den zweiten Translationsaktor 7 aus, da jeder der Druckköpfe 2 möglichst in gleicher Weise relativ zu der ihm zugeordneten Objekthalterung 4 bewegt werden kann, so dass auch durch die Druckköpfe 2 gedruckte Objekte möglichst eine identische Form aufweisen. Die Druckköpfe 2 sind dabei jeweils an den dem Aufnahmeraum 26 gegenüberliegenden Seiten 18 der Tragabschnitte 17 angeordnet, so dass sie jeweils nach außen weisen und den Druckköpfen 2 am jeweils anderen Tragabschnitt 17 ihre Rückseite zuwenden. Diese Anordnung der Druckköpfe 2 kann als eine "back-to-back"-Anordnung der Druckköpfe 2 aufgefasst werden, welche eine besonders kompakte Ausbildung der Vorrichtung 1 ermöglicht.

Der zweite Translationsaktor 7 kann, wie bereits in Bezug zu Fig. 1 beschrieben wurde, an einem der Tragabschnitte 17 sowie an dem ortsfest angeordneten ersten Translationsaktor 6 befestigt sein. Alternativ zu der Befestigung an einem der Tragabschnitte 17 kann der zweite Translationsaktor 7 auch an dem Verbingungsabschnitt 25 befestigt sein. Selbstverständlich ist es auch möglich, dass der erste Translationsaktor 6 an einem Tragabschnitt 17 oder dem Verbindungsabschnitt 25 des Trägerelementes 3 und einem ortsfest angeordneten zweiten Translationsaktor 7 befestigt ist.

Der Objekthalterungsträger 5 umfasst in dem dritten Ausführungsbeispiel zwei Rahmen 14, auf deren Querstreben 16 wie vorangehend dargestellt die Objekthalterungsreihen 10 angeordnet sind, so dass unterhalb jedes der Druckköpfe 2 eine Objekthalterung 4 angeordnet ist. In dem dargestellten dritten Ausführungsbeispiel können durch den ersten Translationsaktor 6, den zweiten Translationsaktor 7 sowie den dritten Translationsaktor 8 insgesamt acht Druckköpfe 2 in gleicher Weise relativ zu den ihnen jeweils zugeordneten Objekthalterungen 4 bewegt werden, so dass ein simultaner 3D-Druck von insgesamt acht Objekten möglich ist. Selbstverständlich ist es möglich, dass an den Tragabschnitten 17 jeweils mehr als zwei Druckkopfreihen 9 übereinander angeordnet sind und/oder dass die Druckkopfreihen 9 jeweils mehr als zwei Druckköpfe 2 umfassen, so dass auch ein Druck von mehr als acht Objekten ermöglicht wird. Wen mehr als die dargestellten Druckkopfreihen 9 beziehungsweise mehr als die dargestellten Druckköpfe 2 pro Druckkopfreihe 9 vorhanden sind, so sind selbstverständlich auch mehr Objekthalterungsreihen 10 bzw. mehr Objekthalterungen 4 vorgesehen, so dass für jeden vorhandenen Druckkopf 2 eine Objekthalterung 4 vorgesehen und unter jeweils einem der Druckköpfe 2 angeordnet ist.

Alternativ zu dem dargestellten einen Objekthalterungsträger 5 können auch zwei separate Objekthalterungsträger 5 vorgesehen sein, welche mehrere in Hochrichtung versetzte Objekthalterungsreihen 10 aufweisen und welche jeweils den an einem der Tragabschnitte 17 angeordneten Druckkopfreihen 9 zugeordnet sind. Bei dem Vorsehen von mehreren Objekthalterungsträgern 5 können diese über einen gemeinsamen dritten Translationsaktor 8 bewegbar sein oder es kann ein separater Translationsaktor für jeden der Objekthalterungsträger 5 vorgesehen sein.

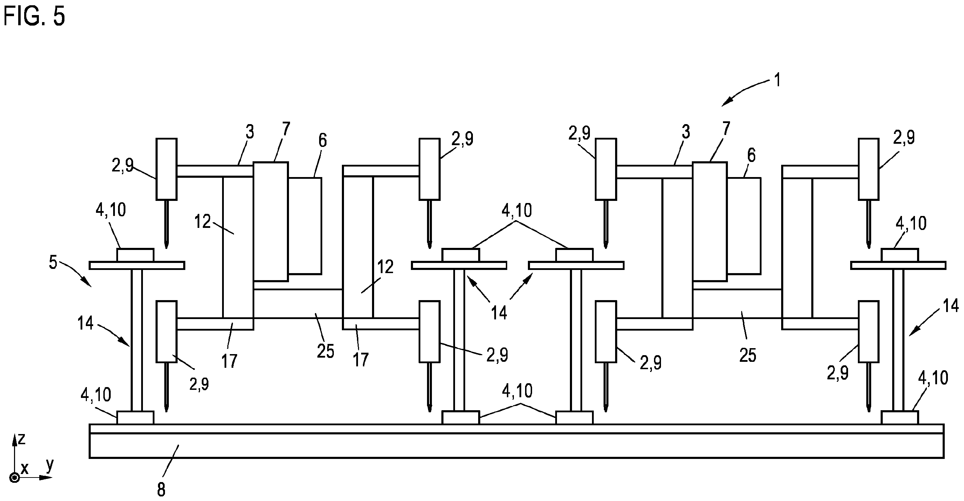

In Fig. 5 ist ein viertes Ausführungsbeispiel einer erfindungsgemäßen Vorrichtung 1 dargestellt. Auch in diesem Ausführungsbeispiel entspricht die Frontansicht der Darstellung in Fig. 1, wobei vorgesehen sein kann, dass pro Druckkopfreihe 9 mehr als mehr zwei Druckköpfe 2 vorgesehen sind und entsprechend pro Objekthalterungsreihe 10 mehr als zwei Objekthalterungen 4 vorgesehen sind. Bei dem vierten Ausführungsbeispiel ist ein Objekthalterungsträger 5 vorgesehen, welcher vier Rahmen 14 umfasst, auf denen jeweils zwei Objekthalterungsreihen 10 angeordnet sind. Die Objekthalterungen 4 sind dabei jeweils einem Druckkopf 2 zugeordnet, welche in insgesamt acht Druckkopfreihen 9 an insgesamt zwei Trägerelementen 3 angeordnet sind. Die Ausführung jedes der Trägerelemente 3 entspricht dabei der Ausführung gemäß dem dritten Ausführungsbeispiel, die gezeigte Vorrichtung 1 umfasst also zwei Trägerelemente 3 mit jeweils acht Druckköpfen 2 in "back-to-back"-Anordnung..

Die Trägerelemente 3 sind jeweils über einen ersten Translationsaktor 6 und einen zweiten Translationsaktor 7 in Querrichtung beziehungsweise in Hochrichtung bewegbar. Der Objekthalterungsträger 5 ist über einen dritten Translationsaktor 8 in Längsrichtung bewegbar. Selbstverständlich ist es möglich, dass mehr als zwei Trägerelemente 3 vorgesehen sind, wobei zusätzliche Trägerelemente 3 in Längsrichtung und/oder in Querrichtung zu den dargestellten Trägerelementen 3 angeordnet werden können. Falls in Querrichtung weitere Trägerelemente 3 angeordnet sind, so umfassen die Objekthalterungsreihen 10 einen derartige Anzahl von Objekthalterungen 4, dass allen Druckköpfen 2 der Druckkopfreihen 9 der in Querrichtung angeordneten Trägerelementen 3 jeweils eine Objekthalterung 4 zugeordnet ist. In der dargestellten Ausführung können insgesamt 16 Objekte gleichzeitig gedruckt werden. Durch das Vorsehen eines einzelnen Objekthalterungsträgers 5, welcher mehreren Trägerelementen 3 zugeordnet ist, kann verglichen mit dem Einsatz mehrerer einzelner Vorrichtungen auf weitere dritte Translationsaktoren 8 verzichtet werden, da sämtliche Objekthalterungen 4 über einen Translationsaktor 8 bewegbar sind.

Selbstverständlich ist es möglich, dass in dem in Fig. 4 gezeigten dritten Ausführungsbeispiel sowie in dem in Fig. 5 gezeigten vierten Ausführungsbeispiel ebenfalls eine Rotationsbewegung um wenigstens eine Rotationsachse zwischen den Objekthalterungen 4 und den Druckköpfen 2 vorgesehen ist. Diese können auch im Fall des dritten und des vierten Ausführungsbeispiels jeweils entsprechend den Ausführungen zum zweiten Ausführungsbeispiel gemäß Fig. 3 erfolgen.

Die Druckköpfe 2 können beispielsweise zur Aufnahme von zur Objektherstellung verwendetem Material in Form von Filamenten Pellets, oder Pulver ausgebildet sein. Auf diese Weise können mittels Schmelzschichtung, auch als Fused Deposition Modeling (FDM) oder Fused Filament Fabrication (FFF) bezeichnet, Objekte hergestellt werden. Auch eine Ausbildung der Druckköpfe 2 für weitere Druckverfahren zur Herstellung von dreidimensionalen Strukturen ist möglich Es ist insbesondere auch möglich, dass die Druckköpfe 2 zum Druck von elektronischen Bauteilen aus flüssigen Materialien wie Tinten, Pasten und/oder Harz, beispielsweise mittels Inkjet-Verfahren oder Ähnlichem, ausgebildet sind.

## Patentansprüche

1. Vorrichtung zum simultanen 3D-Druck mehrerer Objekte, umfassend mehrere Druckköpfe (2) und mehrere jeweils einem der Druckköpfe (2) zugeordnete Objekthalterungen (4), wobei die Druckköpfe (2) und die Objekthalterungen (4) durch wenigstens drei Translationsaktoren (6, 7, 8) entlang von drei Translationsachsen in drei Raumdimensionen relativ zueinander bewegbar sind, wobei die Druckköpfe (2) an genau einem Trägerelement (3) und die Objekthalterungen (4) an einem oder mehreren Objekthalterungsträgern (5) angeordnet sind oder wobei die Druckköpfe (2) an mehreren Trägerelementen (3) und die Objekthalterungen (4) an genau einem Objekthalterungsträger (5) angeordnet sind, **dadurch gekennzeichnet, dass** die Druckköpfe (2) an dem einen Trägerelement (3) oder den mehreren Trägerelementen (3) entlang wenigstens zwei der drei Translationsachsen versetzt angeordnet sind.

2. Vorrichtung nach Anspruch 1, **dadurch gekennzeichnet, dass** die Druckköpfe (2) und die Objekthalterungen (4) durch wenigstens einen Rotationsaktor um wenigstens eine Rotationsachse relativ zueinander bewegbar sind.

3. Vorrichtung nach Anspruch 1 oder 2, **dadurch gekennzeichnet, dass** der oder die Objekthalterungsträger (5) jeweils zumindest abschnittsweise durch wenigstens einen Rotationsaktor verkippbar sind und/oder dass das wenigstens eine Trägerelement (3) zumindest abschnittsweise durch wenigstens einen Rotationsaktor verkippbar ist und/oder dass die Objekthalterungen (4) jeweils einen Rotationsaktor umfassen, über welchen sie um eine der wenigstens einen Rotationsachsachse drehbar sind.

4. Vorrichtung nach einem der vorangehenden Ansprüche, **dadurch gekennzeichnet, dass** der oder die Objekthalterungsträger (5) über wenigstens einen Translationsaktor (8) entlang einer ersten der Translationsachsen bewegbar ist oder sind, wobei das Trägerelement (3) oder die Trägerelemente (3) über wenigstens zwei Translationsaktoren (6, 7) entlang einer zweiten und einer dritten der Translationsachsen bewegbar ist oder sind.

5. Vorrichtung nach einem der vorangehenden Ansprüche, **dadurch gekennzeichnet, dass** die erste Translationsachse entlang einer Längsrichtung der Vorrichtung, die zweite Translationsachse entlang einer Querrichtung der Vorrichtung und die dritte Translationsachse entlang einer Hochrichtung der Vorrichtung verläuft, wobei die Druckköpfe (2) an dem Trägerelement (3) entlang von zwei oder mehr sich in Querrichtung erstreckenden Druckkopfreihen (9) angeordnet sind, wobei jede Druckkopfreihe (9) wenigstens zwei Druckköpfe (2) umfasst, wobei wenigstens zwei der Druckkopfreihen (9) entlang der Hochrichtung und/oder entlang der Längsrichtung voneinander beabstandet sind.

6. Vorrichtung nach Anspruch 5, **dadurch gekennzeichnet, dass** das Trägerelement (3) wenigstens einen Tragabschnitt (17) mit zwei in Längsrichtung beabstandeten Seiten (18, 20) aufweist, wobei auf der einen Seite (18) wenigstens eine Druckkopfreihe (9) und auf der anderen Seite (20) wenigstens ein Translationsaktor (6, 7, 8) angeordnet ist, wobei das Trägerelement (3) zwei in Längsrichtung beabstandete und über wenigstens einen Verbindungsabschnitt (25) des Trägerelements (3) verbundene Tragabschnitte (17) aufweist und/oder wobei auf der einen Seite (18) des wenigstens einen Tragabschnitts (17) wenigstens zwei Druckkopfreihen (9) übereinander angeordnet sind.

7. Vorrichtung nach Anspruch 6, **dadurch gekennzeichnet, dass** die zwei in Längsrichtung beabstandeten Tragabschnitte (17) und der wenigstens eine Verbindungsabschnitt (25) einen Aufnahmeraum (26), in welchem der wenigstens eine Translationsaktor (6, 7, 8) angeordnet ist, zumindest teilweise, insbesondere in einer U-Form, deren Schenkel durch Tragabschnitte (17) und deren Boden durch den wenigstens einen Verbindungsabschnitt (25) gebildet ist, umschließen.

8. Vorrichtung nach Anspruch 7, **dadurch gekennzeichnet, dass** die Tragabschnitte (17) und die Druckkopfreihen (9) spiegelsymmetrisch zu einer sich in Querrichtung und Hochrichtung erstreckenden, zwischen den Tragabschnitten (17) verlaufenden Symmetrieebene (27) sind.

9. Vorrichtung nach einem der Ansprüche 6 bis 8, **dadurch gekennzeichnet, dass** der wenigstens eine Tragabschnitt (17) einen Rahmen (11) umfasst, welcher wenigstens für jede an der Seite des Tragabschnitts (3) angeordnete Druckkopfreihe (9) eine sich in Querrichtung erstreckende Querstrebe (13) aufweist, wobei die Druckköpfe (2) einer Druckkopfreihe (9) jeweils, insbesondere über ein Abstandselement (19), an derselben Querstrebe (13) befestigt sind.

10. Vorrichtung nach einem der Ansprüche 5 bis 9, **dadurch gekennzeichnet, dass** der wenigstens eine Objekthalterungsträger (5) mit wenigstens einem Translationsaktor (6, 7, 8) bewegungsgekoppelt und wenigstens entlang der Längsrichtung bewegbar ist, wobei an dem wenigstens einen Objekthalterungsträger (5) mehrere Objekthalterungen (4) in wenigstens zwei sich in Querrichtung erstreckenden Objekthalterungsreihen (10) angeordnet sind, wobei die wenigstens zwei Objekthalterungsreihen (10) an dem Objekthalterungsträger (5) derart in Längsrichtung und/oder in Hochrichtung versetzt angeordnet sind, dass jeweils die Objekthalterungen (4) einer Objekthalterungsreihe (10) unterhalb der Druckköpfe (2) einer der wenigstens zwei Druckkopfreihen (9) angeordnet sind.

11. Vorrichtung nach Anspruch 10, **dadurch gekennzeichnet, dass** der wenigstens eine Objekthalterungsträger (5) einen Rahmen (14) mit mehreren, sich entlang der Querrichtung erstreckenden Querstreben (16) aufweist, wobei die Objekthalterungsreihen (10) jeweils an, insbesondere auf, einer Querstrebe (16) angeordnet sind.

12. Vorrichtung nach einem der Ansprüche 10 oder 11, **dadurch gekennzeichnet, dass** die Objekthalterungsreihen (10) jeweils über wenigstens einen Rotationsaktor um eine Querrichtung verlaufende Rotationsachse (23) verkippbar sind.

13. Vorrichtung nach einem der vorangehenden Ansprüche, **dadurch gekennzeichnet, dass** die Druckköpfe (2) jeweils zur Aufnahme von zur Objektherstellung verwendetem Material in fester Form, insbesondere von Filamenten, Pellets und/oder Pulver, und/oder zur Aufnahme von zur Objektherstellung verwendetem Material in flüssiger Form, insbesondere von Tinten, Pasten und/oder Harz, ausgebildet sind und/oder dass die Druckköpfe (2) jeweils zum Druck von elektronischen Bauteilen ausgebildet sind.

## Claims

1. Device for the simultaneous 3D printing of a plurality of objects, comprising a plurality of printing heads (2) and a plurality of object holders (4) which are in each case assigned to one of the printing heads (2), wherein the printing heads (2) and the object holders (4) by way of at least three translatory actuators (6, 7, 8) are able to be moved relative to one another along three translation axes in three spatial dimensions, wherein the printing heads (2) are disposed on exactly one carrier element (3), and the object holders (4) are disposed on one or a plurality of object holder carriers (5), or wherein the printing heads (2) are disposed on a plurality of carrier elements (3), and the object holders (4) are disposed on exactly one object holder carrier (5), **characterized in that** the printing heads (2) on the one carrier element (3) or the plurality of carrier elements (3) are disposed so as to be offset along at least two of the three translation axes.

2. Device according to Claim 1, **characterized in that** the printing heads (2) and the object holders (4) by way of at least one rotary actuator are able to be moved relative to one another about at least one rotation axis.

3. Device according to Claim 1 or 2, **characterized in that** the object holder carrier or carriers (5) is/are in each case at least in portions able to be tilted by way of at least one rotary actuator, and/or **in that** the at least one carrier element (3) is at least in portions able to be tilted by way of at least one rotary actuator, and/or **in that** the object holders (4) comprise in each case one rotary actuator by way of which said object holders (4) are able to be rotated about one of the at least one rotation axis.

4. Device according to one of the preceding claims, **characterized in that** the object holder carrier or carriers (5) by way of at least one translatory actuator (8) is/are able to be moved along a first of the translation axes, wherein the carrier element (3) or the carrier elements (3) by way of at least two translatory actuators (6, 7) is/are able to be moved along a second and a third of the translation axes.

5. Device according to one of the preceding claims, **characterized in that** the first translation axis runs along a longitudinal direction of the device, the second translation axis runs along a transverse direction of the device, and the third translation axis runs along a vertical direction of the device, wherein the printing heads (2) on the carrier element (3) are disposed along two or more printing head rows (9) which extend in the transverse direction, wherein each printing head row (9) comprises at least two printing heads (2), wherein at least two of the printing head rows (9) are mutually spaced apart along the vertical direction and/or along the longitudinal direction.

6. Device according to Claim 5, **characterized in that** the carrier element (3) has at least one support portion (17) having two sides (18, 20) which are spaced apart in the longitudinal direction, wherein at least one printing head row (9) is disposed on the one side (18), and at least one translatory actuator (6, 7, 8) is disposed on the other side (20), wherein the carrier element (3) has two support portions (17) which are spaced apart in the longitudinal direction and connected by way of at least one connecting portion (25) of the carrier element (3), and/or wherein at least two printing head rows (9) are disposed on top of one another on the one side (18) of the at least one support portion (17).

7. Device according to Claim 6, **characterized in that** the two support portions (17) which are spaced apart in the longitudinal direction, and the at least one connecting portion (25), at least partially enclose, in particular in a U-shaped manner in which the legs are formed by support portions (17) and in which the base is formed by the at least one connecting portion (25), a receptacle space (26) in which the at least one translatory actuator (6, 7, 8) is disposed.

8. Device according to Claim 7, **characterized in that** the support portions (17) and the printing head rows (9) are mirror-symmetrical to a symmetry plane (27) which extends in the transverse direction and the vertical direction and runs between the support portions (17).

9. Device according to one of Claims 6 to 8, **characterized in that** the at least one support portion (17) comprises a frame (11) which for at least each printing head row (9) disposed on the side of the support portion (3) has one cross brace (13) which extends in the transverse direction, wherein the printing heads (2) of one printing head row (9) are in each case fastened to the same cross brace (13), in particular by way of a spacer element (19).

10. Device according to one of Claims 5 to 9, **characterized in that** the at least one object holder carrier (5) for movement is operatively coupled to at least one translatory actuator (6, 7, 8) and is movable at least along the longitudinal direction, wherein a plurality of object holders (4) on the at least one object holder carrier (5) are disposed in at least two object holder rows (10) which extend in the transverse direction, wherein the at least two object holder rows (10) on the object holder carrier (5) are disposed so as to be offset in the longitudinal direction and/or in the vertical direction in such a manner that the object holders (4) of one object holder row (10) are in each case disposed below the printing heads (2) of one of the at least two printing head rows (9).

11. Device according to Claim 10, **characterized in that** the at least one object holder carrier (5) has a frame (14) having a plurality of cross braces (16) which extend along the transverse direction, wherein the object holder rows (10) are in each case disposed on, in particular on top of, a cross brace (16).

12. Device according to one of Claims 10 or 11, **characterized in that** the object holder rows (10), in each case by way of at least one rotary actuator, are able to be tilted about a rotation axis (23) which runs in a transverse direction.

13. Device according to one of the preceding claims, **characterized in that** the printing heads (2) are in each case configured for receiving material which is used for producing the objects and is in solid form, in particular filaments, pellets and/or powder, and/or for receiving material which is used for producing the objects and is in liquid form, in particular inks, pastes and/or resin, and/or **in that** the printing heads (2) are in each case configured for printing electronic components.

## Revendications

1. Dispositif d'impression 3D simultanée de plusieurs objets, ledit dispositif comprenant plusieurs têtes d'impression (2) et plusieurs porte-objets (4), associés chacun à une des têtes d'impression (2), les têtes d'impression (2) et les porte-objets (4) pouvant être déplacés les uns par rapport aux autres le long de trois axes de translation dans trois dimensions spatiales par au moins trois actionneurs de translation (6, 7, 8), les têtes d'impression (2) étant disposées sur exactement un élément porteur (3) et les porte-objets (4) étant disposés sur un ou plusieurs supports de porte-objets (5) ou les têtes d'impression (2) étant disposées sur plusieurs éléments porteurs (3) et les porte-objets (4) étant disposés sur exactement un support de porte-objets (5), **caractérisé en ce que** les têtes d'impression (2) sont disposées sur un élément porteur (3) ou les plusieurs éléments porteurs (3) en étant décalés le long d'au moins deux des trois axes de translation.

2. Dispositif selon la revendication 1, **caractérisé en ce que** les têtes d'impression (2) et les porte-objets (4) peuvent être déplacés les uns par rapport aux autres sur au moins un axe de rotation par au moins un actionneur en rotation.

3. Dispositif selon la revendication 1 ou 2, **caractérisé en ce que** le ou les supports de porte-objets (5) peuvent chacun être inclinés au moins par portions par au moins un actionneur en rotation et/ou **en ce que** l'au moins un élément porteur (3) peut être actionné au moins par portions par au moins un actionneur en rotation et/ou **en ce que** les porte-objets (4) comprennent chacun un actionneur en rotation qui leur permet de tourner sur un des au moins un axe de rotation.

4. Dispositif selon l'une des revendications précédentes, **caractérisé en ce que** le ou les supports de porte-objets (5) peuvent être déplacés par le biais d'au moins un actionneur en translation (8) le long d'un premier des axes de translation, l'élément porteur (3) ou les éléments porteurs (3) pouvant être déplacés par le biais d'au moins deux actionneurs en translation (6, 7) le long d'un deuxième et d'un troisième des axes de translation.

5. Dispositif selon l'une des revendications précédentes, **caractérisé en ce que** le premier axe de translation s'étend suivant une direction longitudinale du dispositif, le deuxième axe de translation s'étend suivant une direction transversale du dispositif et le troisième axe de translation s'étend suivant une direction verticale du dispositif, les têtes d'impression (2) étant disposées sur l'élément porteur (3) le long de deux rangées de têtes d'impression (9) ou plus qui s'étendent dans la direction transversale, chaque rangée de têtes d'impression (9) comprenant au moins deux têtes d'impression (2), au moins deux des rangées de têtes d'impression (9) étant espacées les unes des autres suivant la direction verticale et/ou suivant la direction longitudinale.

6. Dispositif selon la revendication 5, **caractérisé en ce que** l'élément porteur (3) comporte au moins une portion de support (17) pourvue de deux côtés (18, 20) espacés dans la direction longitudinale, au moins une rangée de têtes d'impression (9) étant disposée sur un côté (18) et au moins un actionneur en translation (6, 7, 8) étant disposé de l'autre côté (20), l'élément porteur (3) comportant des portions de support (17) qui sont espacées dans la direction longitudinale et qui sont reliées par au moins une portion de liaison (25) de l'élément porteur (3) et/ou au moins deux rangées de têtes d'impression (9) étant disposées les unes au-dessus des autres sur un côté (18) de l'au moins une portion de support (17).

7. Dispositif selon la revendication 6, **caractérisé en ce que** les deux portions de support (17) espacées dans la direction longitudinale et l'au moins une portion de liaison (25) entourent un espace de réception (26), dans lequel l'au moins un actionneur en translation (6, 7, 8) est disposé, au moins partiellement, notamment dans une forme en U dont les branches sont formées par des portions de support (17) et dont le fond est formé par l'au moins une portion de liaison (25).

8. Dispositif selon la revendication 7, **caractérisé en ce que** les portions de support (17) et les rangées de têtes d'impression (9) sont à symétrie spéculaire par rapport à un plan de symétrie (27) qui s'étend dans les directions transversale et verticale et entre les portions de support (17).

9. Dispositif selon l'une des revendications 6 à 8, **caractérisé en ce que** l'au moins une portion de support (17) comprend un cadre (11) qui comporte au moins pour chaque rangée de têtes d'impression (9) disposées du côté de la portion de support (3) une traverse (13) qui s'étend dans la direction transversale, les têtes d'impression (2) d'une rangée de têtes d'impression (9) étant chacune fixées à la même traverse (13), notamment par le biais d'un élément d'espacement (19).

10. Dispositif selon l'une des revendications 5 à 9, **caractérisé en ce que** l'au moins un support de porte-objet (5) est accouplé cinématiquement à au moins un actionneur en translation (6, 7, 8) et peut être déplacé au moins suivant la direction longitudinale, plusieurs porte-objets (4) étant disposés sur l'au moins un support de porte-objets (5) sur au moins deux rangées de porte-objets (10) qui s'étendent dans la direction transversale, les au moins deux rangées de porte-objets (10) sur le support de porte-objets (5) étant disposées en étant décalées dans la direction longitudinale et/ou dans la direction verticale de manière à ce que les porte-objets (4) d'une rangée de porte-objets (10) se trouvent au-dessous des têtes d'impression (2) d'une des au moins deux rangées de têtes d'impression (9).

11. Dispositif selon la revendication 10, **caractérisé en ce que** l'au moins un support de porte-objets (5) comprend un cadre (14) pourvu de plusieurs traverses (16) qui s'étendent suivant la direction transversale, les rangées de porte-objets (10) étant disposées chacune au niveau d'une traverse (16), en particulier sur celle-ci.

12. Dispositif selon l'une des revendications 10 ou 11, **caractérisé en ce que** les rangées de porte-objets (10) peuvent chacune être inclinées par le biais d'au moins un actionneur en rotation sur un axe de rotation (23) qui s'étend dans une direction transversale.

13. Dispositif selon l'une des revendications précédentes, **caractérisé en ce que** les têtes d'impression (2) sont chacune conçues pour recevoir une matière, utilisée pour la fabrication d'objets, sous forme solide, notamment de filaments, de pastilles et/ou de poudre, et/ou pour recevoir la matière, utilisée pour la fabrication d'objets, sous forme liquide, notamment d'encres, de pâtes et/ou de résine, et/ou **en ce que** les têtes d'impression (2) sont chacune conçues pour imprimer des composants électroniques.
